(19) Europäisches Patentamt
European Patent Office
Office européen des brevets

(11) Numéro de publication: **0 236 230 B1**

(12) # FASCICULE DE BREVET EUROPEEN

(45) Date de publication de fascicule du brevet: **03.07.91**

(51) Int. Cl.$^5$: **A01N 25/04**, A01N 43/90

(21) Numéro de dépôt: **87400460.9**

(22) Date de dépôt: **03.03.87**

(54) **Suspensions aqueuses contenant au moins un composé choisi parmi les acides 6,7-dihydro-benzoquinolizine-carboxyliques, et leurs applications pour le traitement des végétaux.**

(30) Priorité: **04.03.86 FR 8602976**

(43) Date de publication de la demande:
**09.09.87 Bulletin 87/37**

(45) Mention de la délivrance du brevet:
**03.07.91 Bulletin 91/27**

(84) Etats contractants désignés:
**AT BE DE GB GR IT LU NL**

(56) Documents cités:
**FR-A- 2 166 196**
**GB-A- 634 934**
**US-B- 344 479**

(73) Titulaire: **RIKER LABORATORIES, INC.**
**19901 Nordhoff Street**
**Northridge California(US)**

(72) Inventeur: **Moreau, Claude**
**14 Rue Pernoud**
**F-92160 Anthony(FR)**
Inventeur: **Chevalier, René**
**24 rue du Chapeau Rouge Dadonville**
**F-45300 Pithiviers(FR)**
Inventeur: **Lagain, Daniel**
**80 route de Pithiviers Dadonville**
**F-45300 Pithiviers(FR)**

(74) Mandataire: **Rinuy, Santarelli**
**14, avenue de la Grande Armée**
**F-75017 Paris(FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

On connaît déjà des acides 6,7-dihydro-benzoquinolizine-carboxyliques et leurs esters alkyliques inférieurs, de formule :

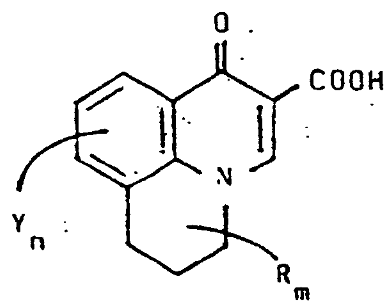

formule dans laquelle chaque Y est choisi dans l'ensemble constitué par un radical alkyle inférieur, alcoxy inférieur, halogéno, hydroxyle, nitro, cyano, trifluorométhyle, amino, alcanamido inférieur, trifluoroacétamido et N,N-dialkylamino inférieur ; chaque R est choisi dans l'ensemble constitué par un radical méthyle, éthyle et trifluorométhyle ; n est un nombre entier valant 0 à 2 et lorsque n vaut 2, Y peut être un radical méthylène-dioxy ou éthylène-dioxy fixé sur les positions adjacentes du noyau ; m est un nombre entier valant 0 à 2, et lorsque R est un radical trifluorométhyle, m vaut 1.

Par ailleurs, ces composés sont également et généralement connus comme agents actifs antibactériens vis-à-vis des bactéries gram - et gram + quelle que soit l'origine de ces bactéries, soit du règne animal, soit du règne végétal, ainsi que cela à déjà été mentionné dans le brevet des Etats-Unis d'Amérique N° 3 896 131 et dans le brevet français correspondant N° 72 46988.

In vitro, l'activité de ces produits est facile à mettre en évidence dès lors que la bactérie se trouve en contact avec le produit utilisé. Les paramètres de concentration et de temps de contact sont variables avec les bactéries.

In vivo chez l'homme ou l'animal, pour être actif, le produit utilisé doit être absorbé dans le sang, les tissus ou les liquides biologiques afin de diffuser ensuite à une concentration et une durée variables selon les bactéries, cause de la maladie.

Pour les plantes, la situation est analogue : le produit doit séjourner sur celles-ci à une concentration et une durée suffisantes pour détruire la bactérie.

C'est ainsi que l'on connaît, par exemple, l'activité des produits ci-dessus rappelés vis-à-vis de pseudomonas, xanthomonas, erwinia, corynebactéries, aeromonas, bactéries phytopathogènes.

Différents moyens de pulvérisation, à différentes concentrations, ont alors été testés.

On a ainsi montré qu'un produit, appartenant à la famille des composés ci-dessus, administré selon les procédés usuels de pulvérisation atmosphérique dans des conditions normales, c'est-à-dire en l'absence de lésions ou de blessures, ne pénétrait pas à l'intérieur de la plante.

En conséquence, seul le produit restant en surface peut être disponible pour lutter contre les bactéries présentes.

Ces essais ont montré que lorsque le produit est pulvérisé sous forme de solution, il est facilement entraîné par l'eau de pluie, donc, a un court temps de contact avec la plante.

Lorsqu'il est pulvérisé sous forme de suspension obtenue avec une poudre mouillable composée de particules de taille et de forme non contrôlées, la quantité de produit présente sur la plante est certes plus importante que dans le cas de la solution mais reste aléatoire et facilement éliminée dans les conditions atmosphériques normales de pluie et de vent.

La présente invention a pour but d'augmenter les concentrations restantes du produit sur la plante sans phytotoxicité. De façon inattendue, ce résultat est obtenu à l'aide de formes cristallines particulières du produit lui-même difficilement soluble dans les conditions d'applications.

Ainsi, selon l'invention, les cristaux de produits utilisables sont obtenus par précipitation d'un produit sous forme d'aiguilles de dimensions variables suivant la nature des solvants particuliers utilisés lors de la précipitation finale ou selon les pH de cristallisation.

En effet, dans la technique antérieure, le solvant de recristallisation était le seul diméthylformamide, ce qui produisait des cristaux de tailles et formes incontrôlées. Or, en vue de l'utilisation selon l'invention, on utilise des cristaux obtenus par recristallisation en milieu acido-basique et en présence ou non d'un solvant

organique pour réaliser une cristallisation homogène du produit sous forme de cristaux en aiguilles. A titre d'exemple, on obtient des aiguilles de caractéristiques convenables, par reprécipitation d'une solution ammoniacale du produit par l'acide chlorhydrique en solution alcoolique 4N.

A une concentration de 100 à 600 parties par million (ppm) dans une eau normale lorsqu'on agite la suspension pour la rendre homogène, la plupart du produit se dissout, la solubilité du produit étant de l'ordre de 300 à 400 µg/ml à pH 7. Il est possible d'augmenter la concentration du produit pour arriver à saturation car les cristaux les plus fins se dissolvent et seuls les grands cristaux restent en suspension.

Une deuxième solution consiste à diminuer la solubilité du produit. Or, on a trouvé que cette solubilité est dépendante du pH et qu'elle décroît fortement dans les zones de pH acide compris entre 1 et 7. Ainsi, dès pH 5, elle n'est plus que de l'ordre de 100 µg/ml pour diminuer encore au fur et à mesure que le pH diminue.

A titre d'exemple, lorsqu'on pulvérise une suspension de fines aiguilles de longueur supérieure à 5µ, dans une eau de pH 5, la quantité de produit retrouvée sur la plante est le double de celle retrouvée en utilisant une supension à particules normales dans une eau normale à pH 7.

Lors de la mise en oeuvre de l'application selon la présente demande, dans ces conditions, il s'est avéré également que le temps de contact produit-plante est multiplié par des facteurs de 1 à 5 suivant les caractéristiques de la suspension.

Une autre conséquence inattendue de la valeur du pH est l'influence sur l'activité antibactérienne elle-même. Selon l'invention, c'est en milieu pH acide que l'on obtient la meilleure activité antibactérienne.

A titre d'exemple, on donne ci-après les concentrations minimales inhibitrices (CMI) obtenues vis-à-vis de quelques bactéries phytopathogènes en faisant varier le pH.

| | pH 7,4 | pH 6,5 | pH 5 |
|---|---|---|---|
| ERWINIA AMYLOVORA | 1 | 0,5 | 0,1 |
| XANTHOMONAS CYNARAE | 2 | 1 | 0,5 |
| XANTHOMONAS PRUNI | 2 | 1 | 0,25 |
| PSEUDOMONAS SYRINGAE | 4 | 2 | 0,5 |
| PSEUDOMONAS VIRIDIFLAVA | 4 | 2 | 1 |

Ainsi, on voit que les CMI peuvent être réduites par un facteur de 1 à 10 lorsque le pH passe de 7, 4 à 5.

L'exemple suivant est donné à titre illustratif d'un mode d'obtention d'une suspension selon l'invention.

Exemple

On part d'une solution ammoniacale à 22° B contenant sous forme dissoute 150 g d'acide [1H-5H] dihydro-6,7 fluoro-9 méthyl-5 oxo-1 benzo [i,j] quinolizine carboxylique-2 (Fluméquine) et 3 ml de "Polysorbate 80". Cette solution ammoniacale est introduite à une température égale ou inférieure à 30° C, dans 405 ml de HCl (20-21° B ; 32-33 %) et on a obtenu une cristallisation homogène du produit sous forme d'aiguilles.

On rajoute la quantité nécessaire de $H_2O$ pour obtenir un volume final de suspension de 1000 ml.

On utilise cette suspension concentrée pour sa pulvérisation sur les plantes après l'avoir diluée 500 fois. Son pH est alors compris entre 2 et 5 suivant la dureté de l'eau de dilution.

Une telle suspension s'est avérée donner des résultats particulièrement intéressants dans la lutte antibactérienne en agriculture du fait du contact prolongé du produit sur les plantes, sans assister à un entraînement par l'eau du produit en raison de sa faible solubilité, vu l'état cristallin en milieu acide sous lequel il se trouve sur la plante traitée.

## Revendications

1. Application des suspensions aqueuses contenant au moins un composé antibactérien choisi parmi les acides 6,7-dihydrobenzoquinolizine-carboxyliques de formule :

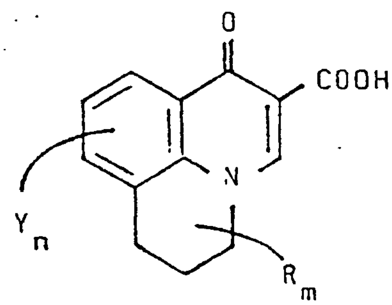

dans laquelle chaque Y est choisi dans l'ensemble constitué par un radical alkyle inférieur, alcoxy inférieur, halogéno, hydroxyle, nitro, cyano, trifluorométhyle, amino, alcanamido inférieur, trifluoracétamido et N,N-dialkylamino inférieur ; chaque R est choisi dans l'ensemble constitué par un radical méthyle, éthyle et trifluorométhyle ; n est un nombre entier valant 0 à 2 et lorsque n vaut 2, Y peut être un radical méthylène-dioxy ou éthylène-dioxy fixé sur les positions adjacentes du noyau ; m est un nombre entier valant 0 à 2 et lorsque R est un radical trifluorométhyle, m vaut 1, renfermant une quantité importante de tels produits cristallisés sous forme d'aiguilles non dissoutes et présentant un pH inférieur ou égal à 7 et obtenues par précipitation d'une solution ammoniacale dudit composé à l'aide d'une solution d'acide chlorhydrique dans un solvant organique au traitement des végétaux.

2. Application des suspensions aqueuses selon la revendication 1, caractérisée en ce que les cristaux non dissous sont constitués par de l'acide [1H-5H] dihydro-6,7-fluoro-9 méthyl-5oxo-1 benzo[i,j]quinolizine-carboxylique-2.

3. Application des suspensions aqueuses selon la revendication 1 ou 2, caractérisée en ce que les cristaux non dissous sont à une concentration au moins égale à la concentration minimale inhibitrice pour une bactérie donnée.

## Claims

1. Application of aqueous suspensions containing at least one antibacterial compound selected from the 6,7-dihydro benzoquinolizine carboxylic acids having the Formula:

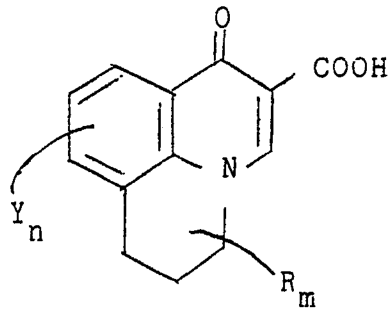

where each Y is selected from the group comprising a lower alkyl, lower alkoxy, halo, hydroxyl, nitro, cyano, trifluoromethyl, amino, lower alkanamido, trifluoroacetamido and lower N,N-dialkylamino; each R is selected from the group comprising a methyl, ethyl and trifluoromethyl radical; n is an integer equal to 0 to 2 and when n is equal to 2, Y can be a methylene-dioxy or ethylene-dioxy radical attached to the adjacent positions on the ring; m is an integer equal to 0 to 2 and when R is a trifluoromethyl radical m is equal to 1, comprising a substantial quantity of said products crystallized in the form of undissolved needles and having a pH lower than or equal to 7 and obtained by the precipitation of an ammoniacal solution of said compound by means of a hydrochloric acid solution in an organic solvent in the treatment of plants.

2. Application of the aqueous suspensions according to claim 1, characterized in that the undissolved crystals are formed by [1H-5H] 6,7-dihydro-9-fluoro-5-methyl-1-oxo-[i,j]-benzo-quinolizine-2-carboxylic acid.

3. Application of the aqueous suspensions according to claims 1 or 2, characterized in that the undissolved crystals have a concentration at least equal to the minimum inhibiting concentration for a given bacterium.

**Ansprüche**

1. Verwendung von wässerigen Suspensionen mit einem Gehalt an mindestens einer antibakteriellen Verbindung ausgewählt aus den 6,7-Dihydrobenzochinolizincarbonsäuren der Formel

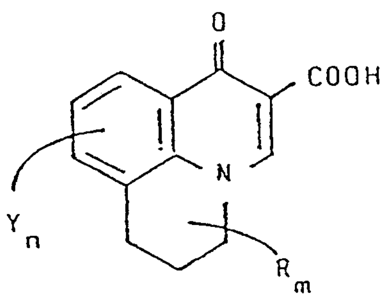

worin jedes Y ausgewählt ist aus der Gruppe bestehend aus einem nied.Alkyl-, nied.Alkoxy-, Halogen-, Hydroxyl-, Nitro-, Cyano-, Trifluormethyl-, Amino-, nied.Alkanamido-, Trifluoracetamido- und N,N-Di-(nied.)alkylaminorest; jedes R ausgewählt ist aus der Gruppe bestehend aus einem Methyl-, Äthyl- und Trifluormethylrest; n eine ganze Zahl von Null bis 2 ist und, wenn n 2 ist, Y einen an benachbarte Stellungen des Ringes gebundenen Methylendioxy- oder Äthylendioxyrest darstellen kann; m eine ganze Zahl von Null bis 2 ist und, wenn R einen Trifluormethylrest darstellt, m 1 ist, enthaltend eine bedeutende Menge derartiger kristallisierter Produkte in Form von nicht-gelösten Nadeln und mit einem pH von weniger als oder gleich 7 und erhalten durch Ausfällung einer ammoniakalischen Lösung der genannten Verbindung mittels einer Lösung von Salzsäure in einem organischen Lösungsmittel, zur Behandlung von Pflanzen.

2. Verwendung von wässerigen Suspensionen nach Anspruch 1, dadurch gekennzeichnet, daß die nicht-gelösten Kristalle aus [1H-5H]-6,7-Dihydro-9-fluor-5-methyl-1-oxo-benzo[i,j]chinolizin-2-carbonsäure bestehen.

3. Verwendung von wässerigen Suspensionen nach Anspruch 1 oder 2, dadurch gekenzeichnet, daß die nicht-gelösten Kristalle in einer Konzentration von mindestens gleich der minimalen Inhibierungskonzentration für ein bestimmtes Bakterium vorliegen.